(19) Europäisches Patentamt
European Patent Office
Office européen des brevets

(11) **EP 2 724 872 B1**

(12) **EUROPEAN PATENT SPECIFICATION**

(45) Date of publication and mention
of the grant of the patent:
**23.05.2018 Bulletin 2018/21**

(51) Int Cl.:
***B60C 11/117*** *(2006.01)*      ***B60C 11/03*** *(2006.01)*

(21) Application number: **12803195.2**

(86) International application number:
**PCT/JP2012/066087**

(22) Date of filing: **22.06.2012**

(87) International publication number:
**WO 2012/176912 (27.12.2012 Gazette 2012/52)**

(54) **MOTORCYCLE PNEUMATIC TIRE**

MOTORRADLUFTREIFEN

PNEU POUR MOTOCYCLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.06.2011 JP 2011141184**

(43) Date of publication of application:
**30.04.2014 Bulletin 2014/18**

(73) Proprietor: **Bridgestone Corporation Tokyo 104-8340 (JP)**

(72) Inventor: **KURASHINA Daisuke**
**Kodaira-shi**
**Tokyo 187-0031 (JP)**

(74) Representative: **Oxley, Robin John George et al**
**Marks & Clerk LLP**
**90 Long Acre**
**London WC2E 9RA (GB)**

(56) References cited:
**EP-A1- 0 788 898          WO-A1-2007/040202**
**DE-U1- 9 417 687          JP-A- 8 188 016**
**JP-A- 2005 138 807        JP-A- 2011 121 408**

**Description**

TECHNICAL FIELD

The present invention relates to a motorcycle pneumatic tire (hereinafter, also simply referred to as "tire"), and more specifically, to a motorcycle pneumatic tire having a more excellent durability than that of a conventional tire while maintaining excellent wet braking performance.

BACKGROUND ART

In order to meet the demand for improving the high speed durability and the steering stability, a motorcycle pneumatic tire having a spiral belt structure becomes mainstream. Here, the term "spiral belt structure" refers to a belt having a structure in which a cord is arranged substantially in the tire circumferential direction at a tread portion, specifically, between a carcass and a tread rubber. Since, in general, the belt is formed by winding spirally (in a spiral shape) a strip composed of one or a plurality of cords on the outside of the carcass, the belt is called a "spiral belt". The spiral belt demonstrates a strong binding force in the circumferential direction, thereby improving the high speed durability and the steering stability.

The tread surface portion of a motorcycle pneumatic tire during straight travelling is divided into a center region which is in contact with a road surface and both side regions which are not in contact with a road surface. In particular, at the tread surface portion of both side regions a tensile strain in the width direction is generated. Such a tensile strain is a phenomenon which is characteristic of the motorcycle pneumatic tire and not generated in a passenger car pneumatic tire since, in a passenger car pneumatic tire, the whole tread surface portion is a contact region.

In a motorcycle pneumatic tire which employs only a spiral belt layer for a belt, a tensile strain is large since the binding force in the tire width direction is smaller than that of a motorcycle pneumatic tire having an inclined belt. When a groove is provided on such both sides region, a tire is subjected to a tensile strain in the width direction. In particular, when a high angle circumferential main groove which is inclined at a small angle with respect to the circumferential direction is provided, a tire is largely influenced and concentration of stress occurs at a corner portion of the bottom of the groove, resulting in problematic early generation of crack on the bottom of the groove, which has been concerned.

For addressing such problems, Patent Document 1 discloses a motorcycle pneumatic tire in which a high speed durability and a steering stability are improved by providing a spiral belt layer; the anti-skid performance during turning on a wet road surface is improved by arranging a lateral main groove extending in the lateral direction in a general tendency on a center region of the tread surface portion and a high angle circumferential main groove having an angle of 0° to 30° with respect to the circumferential direction on both sides region which are on the both sides of the center region and are not in contact with a ground during straight travelling in a length of 0.1 to 0.6 times the pitch length in the circumferential direction; and further, early generation of crack on the bottom of the groove of the circumferential main groove can be inhibited by making the radius of curvature at a corner portion of the bottom of the groove on the tread center side of the circumferential main groove larger than the radius of curvature at a corner portion of the bottom of the groove on the tread end side of the circumferential main groove.

RELATED ART DOCUMENT

PATENT DOCUMENT

Patent Document 1: Japanese Unexamined Patent Application Publication No. H8-169211.
Reference is also made to EP 0788898 and DE 94 17 687 U1.

SUMMARY OF INVENTION

PROBLEMS TO BE SOLVED BY THE INVENTION

At the present day, a tire offers a higher performance, and at the same time, a tire need to have a higher durability. By using a tire described in Patent Document 1, since wet braking performance can be improved and early generation of a crack on the bottom of the groove can be inhibited, a fixed effect of improving the durability can be obtained. Accompanying with a higher performance of a tire in the future, further high durability technique will be required.

Accordingly, an object of the present invention is to provide a motorcycle pneumatic tire having a more excellent durability than that of a conventional tire while maintaining excellent wet braking performance.

MEANS FOR SOLVING THE PROBLEMS

In order to solve the above-mentioned problems, the present inventor intensively studied focusing on the generation mechanism of partial wear in a motorcycle pneumatic tire to find that, when a camber angle is applied when a motor cycle is turning, a tread rubber is compressed and deformed and by a shear force generated by the deformation, partial wear is generated. Based on such a finding, the present inventor intensively studied further to find that, when a tread pattern has a predetermined structure, the shear force generated when the tread rubber is compressed and deformed can be controlled and the above-mentioned problem can be solved, thereby completing the present invention.

In other word, the motorcycle pneumatic tire of the present invention is a motorcycle pneumatic tire comprising a ring-shaped tread portion, characterized in that a steeply-inclined groove having an inclination angle of larger than 0° and not larger than 35° with respect to the circumferential direction is provided on, when the width of a tread portion is set to Tw, the whole or a part of regions from a tire equator to lengths of 1/4Tw in the width direction in a V shape centering on the tire equator, and in that a mildly-inclined groove having an inclination angle of 45° to 90° with respect to the circumferential direction is provided on the whole or a part of regions from the outside end portion of the steeply-inclined groove in the tire width direction to a tread end portion discontinuously with the steeply-inclined groove.

In the present invention, the distance from the tire equator to the outside end portion of the steeply-inclined groove in the width direction and the distance from the tire equator to the inside end portion of the mildly-inclined groove in the width direction are preferably the same. In the present invention, the distance w1 from the tire equator to the outside end portion of the steeply-inclined groove in the width direction preferably satisfies the relationship represented by the following expression:

$$0.25 \leq w1/(1/2Tw) < 0.50$$

EFFECTS OF THE INVENTION

By the present invention, a motorcycle pneumatic tire having a more excellent durability than that of a conventional tire while maintaining excellent wet braking performance can be provided.

BRIEF DESCRIPTION OF THE DRAWINGS

Fig. 1 is a developed plan view illustrating a tread pattern of a motorcycle pneumatic tire according to a preferred embodiment of the present invention.
Fig. 2 is a partial cross-sectional view illustrating a tire directly under a load when a motor cycle is turning at a large camber angle (CA50 degrees).
Fig. 3 is a cross-sectional view illustrating a motorcycle pneumatic tire according to a preferred embodiment of the present invention.
Fig. 4 is a developed plan view illustrating a tread pattern of a motorcycle pneumatic tire according to Comparative Example 2.
Fig. 5 is a developed plan view illustrating a tread pattern of a motorcycle pneumatic tire according to Comparative Example 3.
Fig. 6 is a developed plan view illustrating a tread pattern of a motorcycle pneumatic tire according to Comparative Example 4.
Fig. 7 is a developed plan view illustrating a tread pattern of a motorcycle pneumatic tire according to Comparative Example 5.
Fig. 8 is a developed plan view illustrating a tread pattern of a motorcycle pneumatic tire according to Conventional Example.

MODE FOR CARRYING OUT THE INVENTION

The present invention will now be described in detail by way of Drawings.

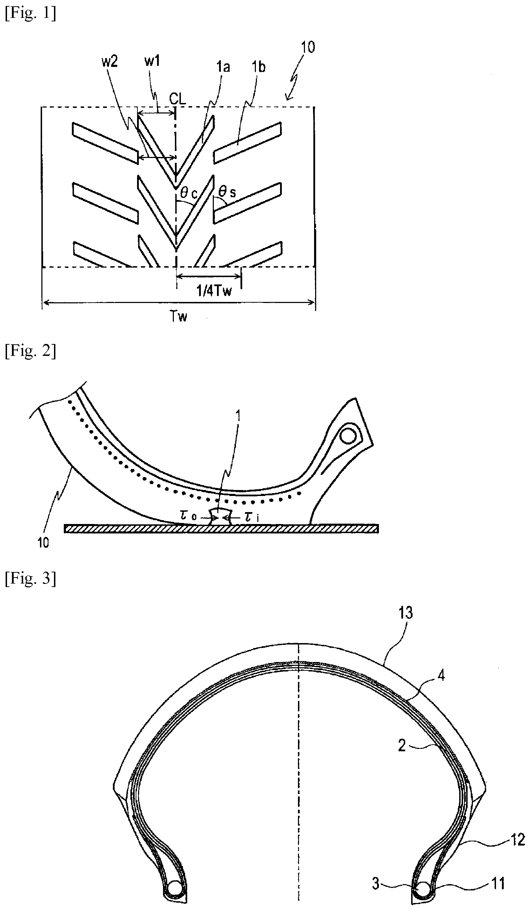

Fig. 1 is a developed plan view illustrating a tread pattern of a motorcycle pneumatic tire according to a preferred embodiment of the present invention. In the tire of the present invention, a steeply-inclined groove 1a having an inclination angle $\theta$c of larger than 0° and not larger than 35° with respect to the circumferential direction is provided on, when the width of the tread portion 10 is set to Tw, the whole or a part of regions from a tire equator CL to lengths of 1/4Tw in the width direction in a V shape centering on the tire equator CL. A mildly-inclined groove 1b having an inclination angle θs of 45° to 90° with respect to the circumferential direction is provided on the whole or a part of a region from the outside end portion of the steeply-inclined groove 1a in the tire width direction to a tread end portion discontinuously with the steeply-inclined groove 1a.

Fig. 2 is a partial cross-sectional view illustrating a tire directly under a load when a motor cycle is turning at a large camber angle (CA50 degrees). Since a tire having a spiral belt structure has a small rigidity at a contact surface in the tire width direction, when a tire is turned when a particularly large camber angle is applied, a tread rubber is compressed as illustrated in the figure and a groove 1 shrinks in the tire width direction. Such state is conspicuous when the inclination angle of a groove with respect to the circumferential direction is small. When a tread rubber is compressed, a shear force $\tau$ generated at a wall portion of the groove 1 in the tire width direction is relatively small ($\tau_o$) on the outside of turning, and large ($\tau_i$) on the inside of turning. For this reason, the shear force $\tau_i$ on the inside of turning where a slippy region is large, thereby generating partial wear. In view of frequency of camber angle, partial wear is considered to be generated in the vicinity of the position of 1/4Tw from the tire equator CL to the tread end.

Accordingly, in the present invention, a steeply-inclined groove 1a having an inclination angle θc of larger than 0° and not larger than 35°, preferably larger than 0° and not larger than 30° with respect to the circumferential direction is provided on the whole or a part of regions from a tire equator CL to lengths of 1/4Tw in the width direction in a V shape centering on the tire equator CL. By this, generation of crack on the bottom of the groove is inhibited while securing drain performance and anti-skid performance during turning on a wet road surface. Since the steeply-inclined groove 1a has a V shape and a compression rigidity is reduced, an effect of attaining steering stability at the time of turning under a small camber angle is obtained.

In a tire of the present invention, a mildly-inclined groove 1b having an inclination angle θs of 45° to 90°, preferably 60° to 90° with respect to the circumferential direction is provided on the whole or a part of regions from the outside end portion of the steeply-inclined groove 1a in the tire width direction to a tread end portion discontinuously with the steeply-inclined groove 1a. By setting the inclination angle θs of a mildly-inclined groove 1b to 45° to 90° with respect to the circumferential direction, compression deformation of a tread rubber is controlled and shear stress $\tau_i$ on the inside of turning is reduced, and generation of partial wear is prevented. Since a force is created on the outside of turning where a sticky region is large, not on the inside of turning where a slippy region is large, braking performance is not affected. Further, in the present invention, since the steeply-inclined groove 1a and the mildly-inclined groove 1b are separated, the tread rubber is hard to be compressed and deformed during turning, thereby favorably obtaining the above-mentioned effect.

In the present invention, the distance w1 from the tire equator CL to the outside end portion of the steeply-inclined groove 1a in the width direction and the distance w2 from the tire equator CL to the inside end portion of the mildly-inclined groove 1b in the width direction are preferably the same (see Fig. 1). When the distance from the tire equator CL to the outside end portion of the steeply-inclined groove 1a in the width direction and the distance from the tire equator CL to the inside end portion of the mildly-inclined groove 1b in the width direction are the same, wet braking performance and partial wear resistance can be attained in good balance.

In the present invention, the distance w1 from the tire equator to the outside end portion of the steeply-inclined groove 1a in the width direction preferably satisfies the relationship represented by the following expression:

$$0.25 \leq w1/(1/2Tw) < 0.50 \ (\text{i.e. } 1/8\,Tw \leq w1 < 1/4\,Tw)$$

This is because, when w1/(1/2Tw) is smaller than 0.25, change in shear force $\tau$ is small and partial wear is affected less. On the other hand, when w1/(1/2Tw) is not smaller than 0.50, shear force $\tau$ is large and partial wear may not be sufficiently prevented.

For the motorcycle pneumatic tire of the present invention, it is important only that the tread pattern satisfies the above-mentioned requirement. The groove width, groove depth, pitch or the like of the steeply-inclined groove 1a and mildly-inclined groove 1b can be appropriately set in a usual way. Fig. 3 is a cross-sectional view illustrating a motorcycle pneumatic tire according to a preferred embodiment of the present invention. As illustrated in the figure, a tire of the present invention comprises a pair of bead portions 11, a pair of side wall portions 12 continued thereto, and a tread portion 13 continued between both side wall portions 12 in a toroidal shape. For a carcass 2 reinforcing these portions between bead portions 11, at least one carcass ply formed by arranging textile cords having a relatively high elasticity in parallel to one another can be used. One, two, or three or more carcass plies may be used. Regarding the both end portions of the carcass 2, although, in the illustrated example, the end portion of the carcass 2 is turned up from the inside to the outside of the tire around a bead core 3 to be engaged, the end portion may be sandwiched to be engaged. In the innermost layer of the tire, an inner liner is arranged (not illustrated). The present invention can be applied not only to a radial tire but to a bias tire.

Although, in Fig. 3, a spiral belt layer 4 composed of a reinforcing element having an angle of 0° to 5° with respect to the tire circumferential direction is arranged as a belt layer, a cross belt layer (not illustrated) may further be arranged. The spiral belt layer 4 can be formed by coating one or a plurality of cords with rubber and winding the rubberized cord spirally around a tread nearly parallel to the tire circumferential direction in a manufacturing process of a tire. The spiral belt layer 4 may be formed by using an organic fiber cord such as aromatic polyamide, or by using a steel cord. For example, the spiral belt layer can be formed by spirally winding a steel cord obtained by twisting steel wires having a diameter of 0.18 mm in 1×5 type at an end count of 50 cords/50 mm. The cross belt layer (not illustrated) can be provided by crossing reinforcing cords composed of aromatic polyamide or the like at angles of ±20° to 80° with respect to the tire circumferential direction.

EXAMPLES

The present invention will now be described concretely by way of Examples.

<Examples 1 to 6>

A tire having a tread pattern illustrated in Fig. 1 was manufactured in a tire size of 120/70ZR17. The width Tw of the tread portion is 160 mm. Details of the tread patterns are listed on Tables 1 to 3. A test tire comprises a carcass composed of two carcass plies (body ply) extending toroidally between a pair of bead cores. For the carcass ply, nylon fiber was used and the angle of the carcass was set to the radial direction (an angle with respect to the equatorial direction was 90°). For a belt layer, a spiral belt layer was arranged. The spiral belt layer was formed in a spiral shape by winding spirally in the equatorial direction a steel cord obtained by twisting a steel wire having a diameter of 0.18 mm in 1×5 type. The spiral belt layer was formed at an end count of 50 cords/50 mm by a method in which one strip body formed by embedding cords in parallel in a coating rubber was spirally wound nearly along the tire equator direction in the rotation axis direction of the tire.

<Comparative Example 1>

A tire was manufactured in a similar manner to Examples 1 to 6. It is noted that Comparative Example 1 differs from Examples 1 to 6 in that the tire has a tread pattern in which the steeply-inclined groove and the mildly-inclined groove are partially overlapped in the width direction of the tread, and in which the steeply-inclined groove and the mildly-inclined groove were continuously formed.

<Comparative Example 2>

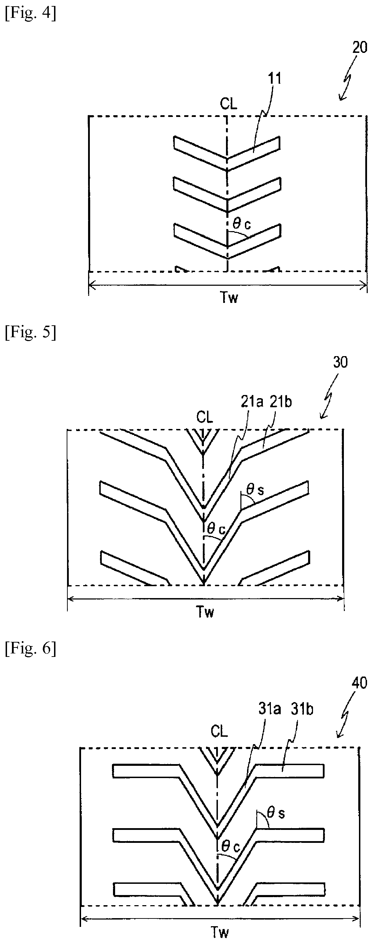

A tire was manufactured in a similar manner to Example 1 except that the tread pattern was formed as illustrated in Fig. 4. Fig. 4 illustrates a pattern of a groove 11 of a tread portion 20 of Comparative Example 2. Details of the tread pattern are listed on Table 2.

<Comparative Example 3>

A tire was manufactured in a similar manner to Example 1 except that the tread pattern was formed as illustrated in Fig. 5. Fig. 5 illustrates a pattern of a steeply-inclined groove 21a and a mildly-inclined groove 21b of a tread portion 30 of Comparative Example 3. Details of the tread pattern are listed on Table 2.

<Comparative Example 4>

A tire was manufactured in a similar manner to Example 1 except that the tread pattern was formed as illustrated in Fig. 6. Fig. 6 illustrates a pattern of a steeply-inclined groove 31a and a mildly-inclined groove 31b of a tread portion 40 of Comparative Example 4. Details of the tread pattern are listed on Table 2.

<Comparative Example 5>

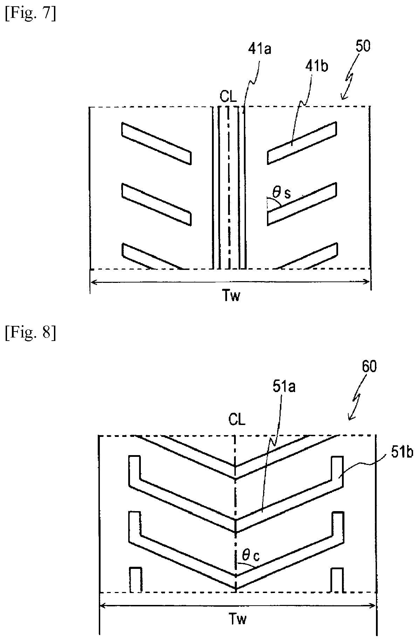

A tire was manufactured in a similar manner to Example 1 except that the tread pattern was formed as illustrated in Fig. 7. As illustrated, for a tread portion 50 of Comparative Example 5, a circumferential direction groove 41a in place of the steeply-inclined groove and a mildly-inclined groove 41b were arranged. Details of the tread pattern are listed on Table 2.

<Comparative Example 6, 7>

A tire was manufactured in a similar manner to Example 1 in a tread pattern illustrated in Fig. 1. Details of the tread pattern are listed on Tables 2 and 3.

<Conventional Example >

A tire was manufactured in a similar manner to Example 1 except that the tread pattern was formed as illustrated in Fig. 8. As illustrated, for a tread portion 60 of Conventional Example, a steeply-inclined groove 51a and a circumferential direction 51b in place of the mildly-inclined groove were arranged. Details of the tread pattern are listed on Table 1.

<Real car travelling test>

Each obtained test tire was seated on a rim having a rim size of MT3.50, inflated to an inner pressure of 250 kPa, and mounted on a real car, then a real car travelling test was performed in a test course for 5000 km. After the test, the groove depths at the center portion of the tire and at the position of 1/4Tw from the tire equator to evaluate the wear resistance. The obtained results are listed on Tables 1 to 3 in combination. From each of the viewpoints of hydroplaning performance, wet traction performance, and handling performance, the evaluation of steering stability of a real car was conducted by a rider. The results are listed on Tables 1 to 3 as an index setting Conventional Example to 100. The higher the value, the better the result.

[Table 1]

| | | Example 1 | Example 2 | Conventional Example | Comparative Example 1* |
|---|---|---|---|---|---|
| Tread pattern | | Fig. 1 | Fig. 1 | Fig. 8 | Fig. 1 |
| Steeply-inclined groove | $\theta c$ (°) | 30 | 30 | 60 | 30 |
| | Groove width (mm) | 7.0 | 7.0 | 7.0 | 7.0 |
| | Groove depth (mm) | 3.7 | 3.7 | 3.7 | 3.7 |
| | Pitch (mm) | 40 | 40 | 40 | 40 |
| | w1(mm) | 30 | 30 | 55 | 45 |
| Mildly-inclined groove | $\theta s$ (°) | 60 | 60 | 0 | 60 |
| | Groove width (mm) | 7.0 | 7.0 | 7.0 | 7.0 |
| | Groove depth (mm) | 3.7 | 3.7 | 3.7 | 3.7 |
| | Pitch (mm) | 40 | 40 | 40 | 40 |
| | w2(mm) | 30 | 25 | 55 | 30 |
| w1/(1/2Tw) | | 0.38 | 0.38 | 0.69 | 0.56 |
| Remaining groove depth at center (mm) | | 1.7 | 1.6 | 1.5 | 1.6 |
| Remaining groove depth at 1/4Tw point (mm) | | 1.3 | 1.3 | 1.0 | 1.1 |
| Steering stability (index) | | 110 | 110 | 100 | 105 |
| *: Steeply-inclined groove and mildly-inclined groove are partially overlapped in the width direction of tread. | | | | | |

[Table 2]

| | | Comparative Example 2 | Comparative Example 3 | Comparative Example 4 | Comparative Example 5 | Comparative Example 6 |
|---|---|---|---|---|---|---|
| Tread pattern | | Fig. 4 | Fig. 5 | Fig. 6 | Fig. 7 | Fig. 1 |
| Steeply-inclined groove | θc (°) | 60 | 30 | 30 | 0 | 40 |
| | Groove width (mm) | 7.0 | 7.0 | 7.0 | 5.0 | 7.0 |
| | Groove depth (mm) | 3.7 | 3.7 | 3.7 | 3.7 | 3.7 |
| | Pitch (mm) | 40 | 40 | 40 | - | 40 |
| | w1(mm) | 30 | 30 | 30 | 12 | 30 |
| Mildly-inclined groove | θs (°) | - | 60 | 90 | 60 | 60 |
| | Groove width (mm) | - | 7.0 | 7.0 | 7.0 | 7.0 |
| | Groove depth (mm) | - | 3.7 | 3.7 | 3.7 | 3.7 |
| | Pitch (mm) | - | 40 | 40 | 40 | 40 |
| | w2(mm) | - | 30 | 30 | 30 | 30 |
| w1/(1/2Tw) | | 0.38 | 0.38 | 0.38 | 0.15 | 0.38 |
| Remaining groove depth at center (mm) | | 1.6 | 1.5 | 1.5 | 1.5 | 1.6 |
| Remaining groove depth at 1/4Tw point (mm) | | 1.3 | 1.0 | 0.9 | 1.2 | 1.3 |
| Steering stability (index) | | 105 | 107 | 105 | 105 | 107 |

[Table 3]

| | | Comparative Example 7 | Example 3 | Example 4 | Example 5 | Example 6 |
|---|---|---|---|---|---|---|
| Tread pattern | | Fig. 1 | Fig. 1 | Fig. 1 | Fig. 1 | Fig. 1 |
| Steeply-inclined groove | θc (°) | 30 | 35 | 30 | 30 | 30 |
| | Groove width (mm) | 7.0 | 7.0 | 7.0 | 7.0 | 7.0 |
| | Groove depth (mm) | 3.7 | 3.7 | 3.7 | 3.7 | 3.7 |
| | Pitch (mm) | 40 | 40 | 40 | 40 | 40 |
| | w1(mm) | 30 | 30 | 30 | 20 | 40 |

(continued)

| | | Comparative Example 7 | Example 3 | Example 4 | Example 5 | Example 6 |
|---|---|---|---|---|---|---|
| Mildly-inclined groove | $\theta$s (°) | 40 | 60 | 50 | 60 | 60 |
| | Groove width (mm) | 7.0 | 7.0 | 7.0 | 7.0 | 7.0 |
| | Groove depth (mm) | 3.7 | 3.7 | 3.7 | 3.7 | 3.7 |
| | Pitch (mm) | 40 | 40 | 40 | 40 | 40 |
| | w2(mm) | 30 | 30 | 30 | 20 | 40 |
| w1/(1/2Tw) | | 0.38 | 0.38 | 0.38 | 0.25 | 0.50 |
| Remaining groove depth at center (mm) | | 1.7 | 1.6 | 1.7 | 1.7 | 1.6 |
| Remaining groove depth at 1/4Tw point (mm) | | 1.1 | 1.3 | 1.2 | 1.3 | 1.3 |
| Steering stability (index) | | 107 | 110 | 110 | 109 | 109 |

From Tables 1 to 3, it is found that, in the tires of the present invention, wet braking performance is excellent; generation of partial wear can be inhibited; and the durability is improved.

DESCRIPTION OF SYMBOLS

1, 11, 21, 31, 41, 51     Groove

2     Carcass

3     Bead core

4     Spiral belt layer

10, 20, 30, 40, 50, 60     Tread portion

11     Bead portion

12     Side wall portion

13     Tread portion

**Claims**

1. A motorcycle pneumatic tire comprising a ring-shaped tread portion (10), **characterized in that**
   a steeply-inclined groove (1a) having an inclination angle ($\theta$c) of larger than 0° and not larger than 35° with respect to the circumferential direction is provided on, when the width of a tread portion (10) is set to Tw, the whole or a part of regions from a tire tire equator (CL) to lengths of 1/4Tw in the width direction in a V shape centering on the tire tire equator (CL), and **in that**
   a mildly-inclined groove (1b) having an inclination angle ($\theta$s) of 45° to 90° with respect to the circumferential direction is provided on the whole or a part of regions from the outside end portion of the steeply-inclined groove (1a) in the tire width direction to a tread end portion discontinuously with the steeply-inclined groove (1a).

2. The motorcycle pneumatic tire according to claim 1, wherein the distance w1 from the tire tire equator (CL) to the outside end portion of the steeply-inclined groove (1a) in the width direction and the distance w2 from the tire tire equator (CL) to the inside end portion of the mildly-inclined groove (1b) in the width direction are the same.

3. The motorcycle pneumatic tire according to claim 1, wherein the distance w1 from the tire tire equator (CL) to the outside end portion of the steeply-inclined groove (1a) in the width direction satisfies the relationship represented by the following expression:

$$1/8\,\mathrm{Tw} \leq \mathrm{w1} < 1/4\,\mathrm{Tw}$$

4. The motorcycle pneumatic tire according to claim 1, wherein a spiral belt layer (4) composed of a reinforcing element having an angle of 0° to 5° with respect to the tire circumferential direction is arranged as a belt layer.

**Patentansprüche**

1. Motorradluftreifen, umfassend einen ringförmigen Laufflächenabschnitt (10), **dadurch gekennzeichnet, dass** eine steil geneigte Rille (1a) mit einen Neigungswinkel (θc) größer als 0° und nicht größer als 35° relativ zur Umfangsrichtung auf allen oder einem Teil der Bereiche von einem Reifenäquator (CL) zu Längen von 1/4Tw in der Breiterichtung V-förmig zentriert auf dem Reifenäquator (CL) bereitgestellt ist, wenn die Breite eines Laufflächenabschnitts (10) gleich Tw gesetzt ist, und dass eine leicht geneigte Rille (1b) mit einem Neigungswinkel (θs) zwischen 45° und 90° relativ zur Umfangsrichtung auf allen oder einem Teil der Bereiche vom äußeren Endabschnitt der steil geneigten Rille (1a) in der Reifenbreitenrichtung zu einem Laufflächenendabschnitt diskontinuierlich mit der steil geneigten Rille (1a) bereitgestellt ist.

2. Motorradluftreifen nach Anspruch 1, wobei der Abstand w1 vom Reifenäquator (CL) zum äußeren Endabschnitt der steil geneigten Rille (1a) in der Breitenrichtung und der Abstand w2 vom Reifenäquator (CL) zum inneren Endabschnitt der leicht geneigten Rille (1b) in der Breitenrichtung einander gleich sind.

3. Motorradluftreifen nach Anspruch 1, wobei der Abstand w1 vom Reifenäquator (CL) zum äußeren Endabschnitt der steil geneigten Rille (1a) in der Breitenrichtung die Beziehung erfüllt, welche durch den folgenden Ausdruck dargestellt ist:

$$1/8\mathrm{Tw} \leq \mathrm{w1} < 1/4\mathrm{Tw}.$$

4. Motorradluftreifen nach Anspruch 1, wobei eine spiralförmige Gürtelschicht (4), gebildet aus einem Verstärkungselement mit einem Winkel zwischen 0° und 5° relativ zur Umfangsrichtung als eine Gürtelschicht angeordnet ist.

**Revendications**

1. Bandage pneumatique pour motocycle, comprenant une partie de bande de roulement de forme annulaire (10), **caractérisé en ce que** :
une rainure à forte inclinaison (1a) ayant un angle d'inclinaison (θc) supérieur à 0° et non supérieur à 35° par rapport à la direction circonférentielle, est formée, lorsque la largeur d'une partie de bande de roulement (10) est ajustée de sorte à correspondre à Tw, sur l'ensemble ou une partie des régions s'étendant d'un équateur du bandage pneumatique (CL) vers des longueurs de 1/4Tw dans la direction de la largeur, en une forme en V, centrée sur l'équateur du bandage pneumatique (CL) ; et **en ce que** :
une rainure à inclinaison légère (1b) ayant un angle d'inclinaison (θs) compris entre 45° et 90° par rapport à la direction circonférentielle, est formée sur l'ensemble ou une partie des régions, de la partie d'extrémité externe de la rainure à forte inclinaison (la), dans la direction de la largeur du bandage pneumatique, vers une partie d'extrémité de la bande de roulement, de manière discontinue avec la rainure à forte inclinaison (1a).

2. Bandage pneumatique pour motocycle selon la revendication 1, dans lequel la distance w1 entre l'équateur du bandage pneumatique (CL) et la partie d'extrémité externe de la rainure à forte inclinaison (1a), dans la direction de la largeur, et la distance w2 entre l'équateur du bandage pneumatique (CL) et la partie d'extrémité interne de la rainure à inclinaison légère (1b), dans la direction de la largeur, sont identiques.

3. Bandage pneumatique pour motocycle selon la revendication 1, dans lequel la distance w1 entre l'équateur du bandage pneumatique (CL) et la partie d'extrémité externe de la rainure à forte inclinaison (1a), dans la direction de la largeur, satisfait la relation représentée par l'expression ci-dessous :

$$1/8 \, \text{Tw} \leq \text{w1} < \frac{1}{4} \, \text{Tw}.$$

4. Bandage pneumatique pour motocycle selon la revendication 1, dans lequel une couche de ceinture en spirale (4) constituée d'un élément de renforcement ayant un angle compris entre 0° et 5° par rapport à la direction circonférentielle, est disposée en tant qu'une couche de ceinture.

[Fig. 1]

[Fig. 2]

[Fig. 3]

[Fig. 4]

[Fig. 5]

[Fig. 6]

[Fig. 7]

[Fig. 8]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H8169211 B
- EP 0788898 A

- DE 9417687 U1